Europäisches Patentamt

European Patent Office

Office européen des brevets

(11) Publication number: **0 420 314 A2**

# EUROPEAN PATENT APPLICATION

(21) Application number: 90202415.7

(51) Int. Cl.5: **A23D 7/00**

(22) Date of filing: 11.09.90

(30) Priority: 29.09.89 GB 8921997

(43) Date of publication of application:
03.04.91 Bulletin 91/14

(84) Designated Contracting States:
AT BE CH DE DK ES FR GB GR IT LI NL SE

(71) Applicant: **UNILEVER NV**
**Burgemeester s'Jacobplein 1 P.O. Box 760**
**NL-3000 DK Rotterdam(NL)**
(84) **BE CH DE DK ES FR GR IT LI NL SE AT**

Applicant: **UNILEVER PLC**
**Unilever House Blackfriars P.O. Box 68**
**London EC4P 4BQ(GB)**
(84) **GB**

(72) Inventor: **Van Heteren, Jan**
**41 Heathside, Hinchly Wood**
**Esher, Surrey KT10 9TD(GB)**
Inventor: **Kelly, Thomas Reid**
**Unilever Research Colworth Lab. Colworth**
**House**
**Sharnbrook, Bedford MK44 1LQ(GB)**
Inventor: **Livingston, Robert Middleton**
**52 Crosby road**
**Westcliff-on-Sea, Essex(GB)**
Inventor: **MacNeill, Avril Brown**
**10, St. Mary's Road**
**Adderbury, Oxon OX173HB(GB)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Spread.**

(57) The present invention is concerned with a spread comprising less than 30 wt.% of a continuous fat phase and at least 70 wt.% of an aqueous phase, wherein the spread comprises 0.1 to 1.5 wt.% of a mixture of monoglycerides and polyglycerol esters in a weight ratio of monoglycerides to polyglycerol esters in the range of 1:10 to 10:1.

The spreads according to the present invention offer the advantage that processing conditions to be used in manufacturing said spreads are not very critical. After processing, the present spreads are comparatively more stable towards phase inversion than similar spreads containing solely monoglycerides or polyglycerol esters. Furthermore the utilization of mixtures of monoglycerides and polyglycerol esters enables the preparation of very low fat spreads containing a substantial amount of non-gelling protein.

## SPREAD

The present invention is concerned with a spread of very low fat content. In particular the present invention relates to a spread containing less than 30 wt.% of a continuous fat phase and at least 70 wt.% of an aqueous phase.

Spreads of the above type are known from European patent 0 237 120 (Unilever), which document is concerned with very low fat spreads containing a viscous gel-forming aqueous phase. It is observed in the European patent that the aqueous phase and/or the fat phase can suitably include emulsifiers. In most examples the use of monoglyceride emulsifiers is illustrated. In Example 2 of EP-A 0 237 120 the use of polyglycerol ester as emulsifier is illustrated.

We have found that a spread of very low fat content displaying excellent stability and giving a good oral response can be obtained if said very low fat spread comprises a substantial amount of a mixture of monoglycerides and polyglycerol esters in a particular weight ratio. Accordingly the present invention is concerned with a spread comprising less than 30 wt.% of a continuous fat phase and at least 70 wt.% of an aqueous phase, wherein the spread comprises 0.1 to 1.5 wt.% of a mixture of monoglycerides and polyglycerol esters in a weight ratio of monoglycerides to polyglycerol esters in the range of 1:10 to 10:1.

The spreads according to the present invention offer the advantage that processing conditions to be used in manufacturing said spreads are not very critical. Since on factory scale it is essentially impossible to avoid fluctuations in processing conditions, the present invention enables the preparation, on factory scale, of fat-continuous very low fat spreads comprising a proteinaceous aqueous phase.

When in the preparation of spreads of a very low fat content as presently claimed, emulsifiers purely consisting of polyglycerol esters or monoglycerides are used, during processing, the fat-continuous dispersion tends to re-invert to an oil-in-water emulsion, particularly if the fat levels employed are below 25 wt.%. Also after processing, the present spread has a finer water droplet distribution and is comparatively more stable.

The utilization of mixtures of monoglycerides and polyglycerol esters enables the preparation of very low fat spreads containing a substantial amount of non-gelling protein, in particular if such spreads also contain a gelling agent. The inclusion of non-gelling protein, in particular non-gelling milk protein, is advantageous as it generally improves the taste of the spread and promotes in-mouth inversion. In-mouth inversion is accompanied by the release of flavour compounds dissolved in the aqueous phase.

The advantages of the inclusion of mixtures of monoglycerides and polyglycerol esters in fat-continuous spreads are particularly appreciated in spreads comprising extremely low levels of fat. Accordingly in a preferred embodiment of the present invention the spread comprises from 10-28 wt.%, more preferably from 15-25 wt.% of a continuous fat phase.

According to a preferred embodiment of the present invention, the spread comprises from 0.2 to 1.0 wt.% of a mixture of monoglycerides and polyglycerol esters. Furthermore, preferably, the weight ratio of monoglycerides to polyglycerol esters is in the range of 1:5 to 5:1.

Polyglycerol ester are normally prepared by the reaction of fatty acids with polymerized glycerol consisting of 2 to 10 molecules. The polymerization and esterification are carefully controlled to produce the desired physical characteristics and functional properties.

The polyglycerol esters present in the spread according to the invention, preferably, have a iodine value of at least 25. More preferably the iodine value exceeds 50. The polyglycerol esters furthermore preferably comprise on average from 2 to 4 molecules of glycerol.

According to a very preferred embodiment the aqueous phase of the present spread contains a gelling amount of edible gelling agent. By the phrase "a gelling amount of edible gelling agent" is meant that one or more edible gelling agents are present at a concentration level that exceeds the critical concentration for these gelling agents in said aqueous phase composition.

The critical concentration of a gelling agent is the concentration level at which said gelling agent will start forming a gel. The critical concentration of the gelling agent(s) in the aqueous phase of the present dispersion is determined in an aqueous system which has exactly the same composition as said aqueous phase; with the exception of the water content and the concentration of gelling agent(s) which have to be varied to establish the critical concentration.

The critical concentration of a gelling agent or a mixture of gelling agents in a particular composition can be calculated from measurements of the shear modulus of a series of samples containing different concentrations of gelling agent or mixture of gelling agents, as described in Br. Polymer J. 17 (1985), 164. If the critical concentration of a combination of gelling agents is to be determined, then the critical concentration of such mixture of gelling agents is determined in a manner analogous to the procedure described above. The composition of the mixture of gelling agents is kept constant and the weight concentration of said mixture is varied as if it consisted of only one single gelling agent.

According to a preferred embodiment of the present invention the gelling agent is selected from the group consisting of gelatin, kappa-carrageenan, iota-carrageenan, alginate, agar, gellan, pectin, starch, whey protein, sodium caseinate, soy protein, microcrystalline cellulose, gelling blends of locust bean gum and xanthan gum and mixtures thereof. Locust bean gum and xanthan gum, as such, are non-gelling thickeners. Mixtures of locust bean gum and xanthan gum, however, are capable of forming gels and are therefore encompassed by the present invention.

According to a more preferred embodiment the gelling agent is selected from the group consisting of gelatin, kappa-carrageenan, iota-carrageenan, starch, whey protein, sodium caseinate and mixtures thereof. Even more preferably the gelling agents is selected from the group consisting of gelatin, starch and mixtures thereof.

Most preferably the aqueous phase of the present spread comprises 1.0 to 5.0 wt.% gelatin and a starch ingredient selected from the group consisting of 1.0 to 6.0 wt.% native intact starch, 3.0 to 14.0 wt.% hydrolyzed starch and 1.0 to 14.0 wt.% of mixtures of native intact starch and hydrolyzed starch.

In a preferred embodiment of the present invention the hydrolyzed starch is a gelling hydrolyzed starch derivative. Spreads having a particularly pleasant oral response can be obtained if the hydrolyzed starch is maltodextrin. Preferably hydrolyzed starches having a Dextrose Equivalent of less than 20, more preferably of less than 10, are utilized.

The inclusion of protein in spreads offers several advantages. However, in particular in case of very low fat spreads, the inclusion of protein adversely affects the product stability and frustrates the preparation of fat-continuous products. In the spread of the present invention substantial amounts of protein may be incorporated. Accordingly the aqueous phase, preferably, comprises more than 0.1 wt.%, more preferably from 0.3 to 5 wt.% of non-gelling protein.

The protein included in the aqueous phase can, for instance, be of vegetable origin, such as soy protein, or of dairy origin, e.g. the protein found in buttermilk powder or skim milk powder. Preferably the protein included is of dairy origin.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, butter oil, fish oil, lard and tallow, which may have been partially or completely hydrogenated, fractionated, interesterified or modified otherwise, as well as non-toxic fatty materials having properties similar to triglycerides, which materials may be indigestible, such as for example waxes, e.g. jojoba oil and hydrogenated jojoba oil, and polyol fatty acid polyesters. Throughout this application the terms fat and oil are deemed synonymous and used interchangeably.

In another preferred embodiment of the present invention the fat phase of the spread contains less than 7 % saturated fatty acid residues by weight of the product. Here by saturated fatty acid residues are meant the digestible fatty acid residues, i.e. not the fatty acid residues present in indigestible fat replacers such a sucrose polyesters. The consumption of relatively large amounts of saturated fatty acid residues is known to increase the cholesterol content of the blood and may thus promote the risk of heart and vascular diseases. It is thus advantageous if a product contains a reduced amount of saturated fatty acid residues. The spread according to this preferred embodiment of the invention combines a very good product quality with an extremely low content of saturated fatty acid residues. Although spreads having a lower saturated fatty acid residues content have been described in the art, these prior art products have in common that they contain essentially no fat and are inferior to spreads containing substantial amounts of fat. In a very preferred embodiment of the invention the fat phase comprises from 3.5% - 6.0% of saturated fatty acid residues by weight of the product.

In addition to a low content of saturated fatty acid residues, the present spread preferably contains a high level of polyunsaturated fatty acid residues. Preferably the present spread contains polyunsaturated and saturated fatty acid residues in a weight ratio of at least 1.5, more preferably of at least 2.0.

The present invention encompasses spreads containing a continuous fat phase and an aqueous phase which may be either continuous or discontinuous. Preferably the present spread is an water-in-oil dispersion, i.e. preferably the aqueous phase of the present spread is composed of dispersed water droplets. Water-in-oil emulsions offer the advantage that they are much more stable towards microbiological infection than emulsions containing a continuous aqueous phase. It is to be understood that the term water-in-oil dispersion also encompasses dispersions of the duplex type wherein the dispersed aqueous phase contains a dispersed fat phase. Fat-continuous spreads containing a dispersed aqueous phase are characterized by a very low conductivity.

The water droplet size of the dispersed aqueous phase is of influence on the flavour release, stability and appearance of the present spread. Products of a very good quality can be obtained if the water droplets have a number weighted mean diameter of less than 70 microns, more preferably of 30-60 microns. Whenever referred to in this document, the number weighted mean diameter is determined by means of NMR [see J. Colloid and Interface Science (1972) 10 , 206 and (1983) 93 , 521] using a log-normal distribution as is commonly employed for particle size analysis.

With regard to the product quality, in particular the oral response, the gelatin content employed in the present spread appears to be important. According to a very preferred embodiment of the present invention the aqueous phase contains 1.5 to 4.5 wt.% gelatine. Furthermore, preferably, the aqueous phase contains 3.5 to 13.0 wt.%, more preferably 5.0 to 12.0 wt.% hydrolyzed starch. The native intact starch content of the present spread preferably is within the range of 1.5 to 5.0 wt.%. The total content of native intact starch and hydrolyzed starch of the present spread preferably is in the range of 1.5 to 12.0 wt.%.

The aqueous phase, in addition to gelling agents, can suitably include other ingredients such as thickening agents, gelling agents, salt and flavour ingredients. Suitable thickening agents are, for instance, gums like guar gum, locust bean gum and xanthan gum.

The aqueous phase of the spread according to the present invention preferably has been acidified to a pH in the range of 4.8 to 5.5. A pH within this range guarantees an acceptable microbiological stability in combination with a good taste. The aqueous phase composition may have been prepared from normal tap water, but also from aqueous compositions of dairy origin such as for instance skim milk. In case skim milk is used in the preparation of the aqueous phase composition it can be advantageous from a microbiological point of view to use reconstituted skim milk.

According to yet another preferred embodiment the fat phase of the present spread has an $N_{10}$ value in the range of/10-35 an $N_{20}$ in the range of 5-15 and an $N_{35}$ of less than 3. More preferably the $N_{10}$ value is in the range of 10-25. Spreads according to the invention comprising such a fat phase are found to be relatively quick melting in the mouth and are easily spreadable even when taken directly from the refrigerator. The N-value at a certain temperature may be determined by means of NMR, using the method described in "Fette, Seifen, Anstrichmittel", 80 (1978), 180-186.

The fat phase of the present spread can comprise several ingredients such as colouring agents, flavourings and vitamins.

The spread according to the present invention may suitably be prepared by means of processing equipment well known in the art of spread manufacture. Examples of apparatus that can be used in the manufacture of the present spread are scraped surface heat exchangers (Votators TM), crystallizers (C-units), resting tubes, cavity transfer mixers, static mixers, resting tubes, pressure valves and static heat exchangers such as cooling coils.

The present spread may be prepared by a process including the inversion of a water-continuous emulsion to a fat-continuous dispersion as well as by a process in which a fat-continuous emulsion is formed upon admixing the aqueous phase composition with the fat blend prior to passing the emulsion so formed through the production line.

The present invention is further illustrated by means of the following example:

Examples 1 and 2

Two spreads, of very low fat content (27.5 wt.%) were prepared from the following ingredients (in % by weight of total product):

|  | Spread A | Spread B |
|---|---|---|
| Fat phase |  |  |
| Rape seed oil | 12.2 | 12.2 |
| Rape seed oil hardened to a slip melting point of 32° C | 9.4 | 9.4 |
| Palm oil | 5.4 | 5.4 |
| Triodan 20 TM 1 | 0.3 | 0.3 |
| Hymono 4404 TM 2 | 0.2 | 0.2 |
| Beta-carotene (6% in oil) | 0.01 | 0.01 |
| Aqueous phase |  |  |
| Paselli SA2 TM (maltodextrin) | 7.5 | 8.0 |
| Gelatin 250 bloom | 3.0 | 3.0 |
| Buttermilk powder |  | 1.0 |
| Salt | 1.0 | 1.0 |
| Sorbic acid | 0.12 | 0.12 |
| Lactic acid (15% solution) to a pH of 4.9 |  |  |
| Water | to 100% | to 100% |

1 polyglycerol ester (ex GRINDSTED, Denmark)
2 monoglycerides (ex QUEST, Brumborough, United Kingdom)

The spreads were prepared by first separately preparing the aqueous phase composition and fat phase composition and then feeding the two compositions in separate streams (both having a temperature of about 50° C) via a proportioning pump to the production line. In the proportioning pump the fat blend and aqueous phase composition were combined in a weight ratio of 27.5:72.5. From the proportioning pump the emulsion was fed, at a throughput of 2.0 tons/hr, through two scraped surface heat exchangers (Votators TM), followed by a C-unit and yet another scraped surface heat exchanger, after which the product was filled into tubs. The three scraped surface heat exchangers had a diameter of 10 inch. The exit temperature of the emulsion from the second Votator was 13° C. After the C-unit the emulsion had reached a temperature of 17° C and the filling temperature was 15° C. The C-unit was operated at 650 rpm and the first, second and third Votator were operated at 700, 500 and 500 rpm respectively.

The pH of both products was found to be 5.0. The concentration level of saturated fatty acid residues in the products appeared to be in the range of 5.5 to 5.6 wt.%. The spreads were evaluated by a professional test panel who found that they both had a satisfactory taste and texture. The product containing buttermilk powder was judged to have a significantly better taste than the product containing no milk protein. The taste of the milk protein containing product was said to be richer and more rounded-off than that of the other product.

Neither of the two spreads showed syneresis upon spreading and both appeared to be easy spreadable even when taken from a refrigerator. The $C_5$ and $C_{20}$ value of the spreads were found to be 600 and 100 respectively.

During the preparation of the spread containing buttermilk powder, it was observed that the processing conditions could be varied substantially while still obtaining a spread of acceptable quality. Also when the fat blend composition was varied good products could be obtained.

Examples 3 and 4

Two spreads of very low fat content (20.0.%) were prepared from the following ingredients (in % by weight of total product):

5

|  | Spread A | Spread B |
|---|---|---|
| **Fat phase** | | |
| Triglyceride blend [1] | 19.5 | 19.5 |
| Triodan 20 ™ (polyglycerol ester) | 0.3 | 0.3 |
| Hymono 4404 ™ (monoglycerides) | 0.2 | 0.2 |
| Beta-carotene (6% in oil) | 0.01 | 0.01 |
| **Aqueous phase** | | |
| Paselli SA2 ™ (maltodextrin) | 9.0 | 12.0 |
| Gelatin 250 bloom | 3.0 | 3.0 |
| Buttermilk powder | | 1.0 |
| Salt | 1.0 | 1.0 |
| Sorbic acid | 0.12 | 0.12 |
| Lactic acid (15% solution) to a pH of 4.9 | | |
| Water | to 100% | to 100% |

[1] Triglyceride blend composed of palm oil (3.9 wt.%), rapeseed oil (8.8 wt.%) and rapeseed oil hardened to a slip melting point of 32° C (6.8 wt.%).

The processing conditions employed were similar to those described in Example 1, with the exception that the aqueous phase and fat phase were combined into a premix and then fed to the first scraped surface heat exchanger.

Both products obtained were of acceptable quality. The product containing milk protein was found to have a more rounded off and balanced taste.

When the above experiment is repeated, using either 0.5 wt.% of monoglycerides or 0.5 wt.% polyglycerol esters as the sole emulsifier, it becomes difficult to maintain fat-continuity in the processing-line. Also the products obtained are of a lower quality than the products obtained with a mixture of monoglycerides and polyglycerol esters.


Examples 5-8

Four very low fat spreads were prepared on the basis of the following formulation:

Fat phase

| | |
|---|---|
| Triglyceride blend [1] | 19.5 |
| Emulsifier [2] | 0.5 |
| Beta carotene and flavour | trace |

Aqueous phase

| | |
|---|---|
| Paselli SA2 TM (maltodextrin) | 12.0 |
| Gelatin 250 bloom | 3.0 |
| Salt | 1.5 |
| Sorbic acid | 0.12 |
| Lactic acid (15% solution) to a pH of 4.9 | |
| Water | to 100% |

[1] Triglyceride blend composed of soybean oil (50 wt.%), soybean oil hardened to a slip melting point of 38°C (30 wt.%) and an interesterified blend (20 wt.%) of palm oil hardened to 58°C (40 parts) and palm kernel oil hardened to 39°C (60 parts).

[2] Emulsifier systems used had following composition:

| Emulsifier system | A | B | C | D |
|---|---|---|---|---|
| Hymono 4404 TM | 0.2 | 0.2 | | |
| Hymono 7804 TM | | 0.3 | | 0.5 |
| Triodan 20 TM | 0.3 | | 0.5 | |

The products were prepared at a throughput of 100 kg/hr from a water-continuous premix using a sequence consisting of a scraped surface heat exchanger (Votator), a crystallizer (C-unit), another scraped surface heat exchanger and another crystallizer. Phase inversion to a fat-continuous emulsion was achieved in the first crystallizer.

The very low fat spread produced with emulsifier system A was found to be the best product. The product prepared using emulsifier systems B and D were water-continuous. The very low fat spread containing emulsifier system C was fat-continuous but had a very coarse water distribution and an inhomogeneous appearance.

### Claims

1. Spread comprising less than 30 wt.% of a continuous fat phase and at least 70 wt.% of an aqueous phase, wherein the spread comprises 0.1 to 1.5 wt.% of a mixture of monoglycerides and polyglycerol esters in a weight ratio of monoglycerides to polyglycerol esters in the range of 1:10 to 10:1.

2. Spread according to claim 1, wherein the spread comprises from 15-28 wt.% of a continuous fat phase.

3. Spread according to claim 1 or 2, wherein the weight ratio of monoglycerides to polyglycerol esters is in the range of 1:5 to 5:1.

4. Spread according to any one of claims 1-3, wherein the polyglycerol esters comprise on average from 2 to 4 molecules of glycerol.

5. Spread according to any one of claims 1-4, wherein the aqueous phase contains a gelling amount of edible gelling agent.

6. Spread according to any one of claims 1-5, wherein the gelling agent is selected from the group consisting of gelatin, kappa-carrageenan, iota-carrageenan, alginate, agar, gellan, pectin, starch, whey protein, sodium caseinate, soy protein, microcrystalline cellulose, gelling blends of locust bean gum and xanthan gum and mixtures thereof.

7. Spread according to any one of claims 1-6, wherein the gelling agent is selected from the group consisting of gelatin, kappa-carrageenan, iota-carrageenan, starch, whey protein, sodium caseinate and mixtures thereof.

8. Spread according to claim 7, wherein the gelling agent is selected from the group consisting of gelatin, starch and mixtures thereof.

9. Spread according to claim 8, wherein the aqueous phase contains 1.0 to 5.0 wt.% gelatin and a starch ingredient selected from the group consisting of 1.0 to 6.0 wt.% native intact starch, 3.0 to 14.0 wt.% hydrolyzed starch and 1.0 to 14.0 wt.% of mixtures of native intact starch and hydrolyzed starch.

10. Spread according to any one of claims 1-9, wherein the aqueous phase contains from 0.3 to 5 wt.% non-gelling protein, preferably of dairy origin.